# EUROPÄISCHE PATENTSCHRIFT

(11) **EP 2 673 788 B1**
(45) Veröffentlichungstag und Bekanntmachung des Hinweises auf die Patenterteilung: **31.12.2014**
(21) Anmeldenummer: 12706219.8
(22) Anmeldetag: 09.02.2012
(51) Int. Cl.: H01F 5/04, H01F 41/10, B23K 35/00

(54) **SPULENEINRICHTUNG SOWIE VERFAHREN ZU DEREN HERSTELLUNG**
COIL DEVICE AND METHOD OF MANUFACTURING THEREOF
DISPOSITIF À BOBINE ET PROCÉDÉ DE FABRICATION DE CELUI-CI

(30) Priorität: 09.02.2011 DE 102011010777
(43) Veröffentlichungstag der Anmeldung: 18.12.2013
(73) Patentinhaber: Eto Magnetic GmbH, 78333 Stockach (DE)
(72) Erfinder: BECHLER, Matthias, 78224 Singen-Friedingen (DE)
(74) Vertreter: Wagner, Kilian
(86) Internationale Anmeldenummer: PCT/EP2012/052188
(87) Internationale Veröffentlichungsnummer: WO 2012/107515

(56) Entgegenhaltungen:
- WO-A1-2010/110046
- DE-A1- 3 838 825
- DE-A1-102007 030 057
- DE-C1- 19 528 273
- DE-U1-202005 016 789
- DE-U1-202006 011 904
- DE-U1-202010 009 713
- JP-A- 7 178 567
- JP-A- 61 179 513
- JP-A- 2004 103 862

## Beschreibung

Die Erfindung betrifft eine Spuleneinrichtung gemäß dem Oberbegriff des Anspruchs 1 mit einer Spulenwicklung für eine elektromagnetische Stellvorrichtung oder einem elektromagnetischen Sensor, beispielsweise einen ABS-Sensor in einem Kraftfahrzeug, aufweisend einen mit einer Isolierung versehenen Draht, der zu zumindest einem als metallisches Teil, insbesondere Stanzteil, ausgebildeten Kontaktelement geführt und dort mit einem abisolierten Abschnitt, insbesondere einem Endabschnitt, zwischen dem Kontaktelement und einer Metallabdeckung aufgenommen und mit dem Kontaktelement verschweißt ist.

Ferner betrifft die Erfindung eine elektromagnetische Stellvorrichtung oder einen elektromagnetischen Sensor mit einer nach dem Konzept der Erfindung ausgebildeten Spuleneinrichtung gemäß Anspruch 6, die Verwendung einer Schweißelektrode zum Verschweißen eines Wicklungsdrahtes einer Spulenwicklung einer Spuleneinrichtung mit einem Kontaktelement gemäß Anspruch 7, sowie ein Herstellungsverfahren zum Herstellen einer nach dem Konzept der Erfindung ausgebildeten Spuleneinrichtung gemäß Anspruch 9.

Aus der DE 20 2006 011 904 U1 ist eine elektromagnetische Stellvorrichtung bekannt, die eine stationäre Spuleneinrichtung zum Verstellen eines langgestreckten Stellelements bei Bestromung aufweist. Die Spuleneinrichtung umfasst dabei einen Kunststoffträger mit einer darauf angeordneten Spulenwicklung, wobei die Enden des Wicklungsdrahtes zu je einem Kontaktelement geführt und mit diesem verschweißt sind. Üblicherweise wird zum Verschweißen ein sogenanntes Plättchenschweißverfahren (ein Widerstandsschweißverfahren) angewandt, bei welchem das Wicklungsdrahtende zwischen dem Kontaktelement und einem Metallplättchen aufgenommen und dann durch Beaufschlagen des Metallplättchens mit einem Stromimpuls mit dem Kontaktelement verschweißt wird. Bei dem Schweißvorgang erfolgt gleichzeitig auch ein Verschweißen des Metallplättchens mit dem Kontaktelement.

Bei dem zuvor erläuterten, an sich bekannten Widerstandsschweißverfahren drückt die in einem Schweißkopf eingespannte Elektrode das Metallplättchen mit einer definierten Kraft auf den auf das Kontaktelement aufgelegten Kupferdraht und prägt dabei eine Vertiefung (Drahteinlauf) in das Plättchen, die das Wicklungsdrahtende aufnimmt. Nach Erreichen der eingestellten Kraft wird der Wicklungsdraht durch einen Stromimpuls mit einem ebenen Bereich des Kontaktelements durch Verschweißen verbunden und dabei abisoliert. Damit vor der Beaufschlagung des Metallplättchens mit einem Stromimpuls durch kraftbeaufschlagendes Metallplättchens mittels der Elektrode in das Metallplättchen der Drahteinlauf eingeprägt werden kann, muss in der Elektrode eine entsprechende Geometrie vorgesehen werden. Diese Geometrie ist vergleichsweise verschleißanfällig, was zu einer geringen Standmenge der zum Einsatz kommenden Elektroden führt. Die Elektroden müssen häufig nachgearbeitet werden, wobei in der Praxis hierzu die Elektrodenstirnseite nachgesetzt und die Geometrie neu eingefräst werden muss.

Bei dem bekannten Verfahren ist auch die Qualitätssicherung bzw. Überprüfung der Schweißplättchen mittels Bildverarbeitungssoftware, nach dem Schweißen problematisch. Die dreidimensionale, geprägte Geometrie beinhaltet unterschiedlich spiegelnde Freiformflächen. Zudem ändert sich die Plättchengeometrie mit zunehmendem Elektrodenverschleiß.

Bei einem weiteren, alternativen, aus der Praxis bekannten Widerstandsschweißverfahren zur materialschlüssigen Verbindung eines Spulenwicklungsdrahtes mit Kontaktelementen werden nicht von dem Kontaktelement separate Metallplättchen mit dem Kontaktelement verschweißt, sondern eine am Kontaktelement seitlich vorgesehene, umbiegbare Lasche, die nach dem Umbiegen das Wicklungsdrahtende zusammen mit dem eigentlichen Kontaktelement einschließt. Bei diesem Verfahren wird eine abgeschrägte Elektrode eingesetzt, also eine Elektrode, die eine nicht senkrecht zur Kraftbeaufschlagungsrichtung verlaufende Wirkfläche aufweist, um die umgebogene Lasche derart zu prägen, dass eine optimierte Klemmung des Wicklungsdrahtendes sichergestellt ist, bzw. dass eine Aufnahme für den Draht geprägt wird. Auch bei diesem Verfahren resultiert ein nicht unerheblicher Verschleiß der abgeschrägten Stirnfläche (Wirkfläche) der zum Einsatz kommenden Schweißelektrode, was zu geringen Standzeiten und einer aufwändigen Nacharbeitung der Wirkfläche führt.

Aus der JP 2004103862 A, die eine Spuleneinrichtung gemäss Präambel des vorliegenden Anspruchs 1 offenbart, ist es bekannt, einen Wicklungsdraht in einer Lasche mit Wicklungsdrahteinlaufgeometrie aufzunehmen, so dass für eine Verschweißung des Wicklungsdrahtes mit der Lasche eine Schweißelektrode eingesetzt werden muss, die eine entsprechende Negativkontur der Wicklungsdrahteinlaufgeometrie aufweist.

Aus der JP 61179513 A ist es bekannt, eine Schweißelektrode zum Verschweißen eines Wicklungsdrahtes einer Spulenwicklung mit einem Kontaktelement vorzusehen, in das eine sich in Richtung der Längserstreckung des Wicklungsdrahtes erstreckende Vertiefung eingebracht ist, die aber nicht den Wicklungsdaht darin aufnimmt sondern nur den Zugang für die untere Schweisselektrode ermöglicht. Die Druckschrift zeigt keine auf die Vertiefung aufzusetzende Metallabdeckung ohne Wicklungsdrahtaufnahme-Vertiefung.

Ausgehend von dem vorgenannten Stand der Technik liegt der Erfindung die Aufgabe zugrunde, eine alternative Spuleneinrichtung anzugeben, die sich durch eine einfache Fertigbarkeit auszeichnet. Zudem sollten sich die zur Herstellung der Spuleneinrichtung zum Einsatz kommenden Elektroden durch einen geringeren Verschleiß auszeichnen. Insgesamt sollen die Herstellungskosten reduziert werden. Bevorzugt soll eine fehlerunauffälligere Bildverarbeitungsprüfung der Metallabdeckung, insbesondere eines Metallplättchens oder einer Metalllasche, nach dem Schweißen vereinfacht möglich sein.

Ferner besteht die Aufgabe darin, ein entsprechend verbessertes, kostengünstigeres und eine lange Standmenge der Elektroden sicherstellendes Herstellverfahren zum Herstellen einer Spuleneinrichtung anzugeben.

Diese Aufgabe wird durch Angabe der Spuleneinrichtung gemäss Patentanspruch 1, des Verfahrens gemäss Anspruch 9 und der Verwendung gemäss Anspruch 7 gelöst.

Vorteilhafte Weiterbildungen der Erfindung sind in den Unteransprüchen angegeben.

Der Erfindung liegt der Gedanke zugrunde, eine im Stand der Technik in der Metallabdeckung, vorgesehene Einprägung (Einlaufgeometrie) für den Wicklungsdraht unmittelbar quasi gespiegelt, im Kontaktelement vorzusehen, wodurch auf ein Einprägen einer solchen Geometrie in die Metallabdeckung, insbesondere ein Metallplättchen oder eine einteilig mit dem Kontakt ausgebildete, umbiegbare Lasche verzichtet werden kann. Hierdurch ist es möglich, ein keine Einlaufgeometrie aufweisendes, planares Metallplättchen oder eine einlaufgeometriefreie Metalllasche mit dem Kontaktelement planar zu verschweißen, ohne dass auf eine formschlüssige Drahtaufnahme, insbesondere eine Drahtquetschung in eine sich in Richtung der Längserstreckung des Wicklungsdrahtes erstreckende Vertiefung verzichtet werden muss.

Das Vorsehen einer entsprechenden, vorzugsweise randseitig offenen Drahtaufnahme-Vertiefung (=Wicklungsdrahteinlaufgeometrie) in dem Kontaktelement bringt eine Vielzahl von Vorteilen mit sich. So können geometrisch wesentlich einfacher beschaffene Schweißelektroden mit einer stirnseitig planaren Wirkfläche eingesetzt werden, da es nicht mehr, wie im Stand der Technik, notwendig ist, eine entsprechende Prägegeometrie in die Schweißelektrode einzufräsen. Hierdurch wird die Neuanfertigung der Schweißelektrode günstiger. Zudem beschränkt sich die Nacharbeit auf das Nachsetzen der planen Fläche. Ein weiterer wesentlicher Vorteil besteht in der aus der Erfindung resultierenden erhöhten Standmenge der Elektroden, da die planare Elektrodenstirnfläche (Wirkfläche) wesentlich langsamer verschleißt als die bisher notwendige komplexe Prägegeometrie. Ein weiterer wesentlicher Vorteil besteht darin, dass die Qualität der Schweißverbindung über die Elektrodenstandmenge konstanter wird als bisher, da kein Verschleiß einer Prägegeometrie vorliegt, sondern jedes Kontaktelement eine identische Vertiefungsgeometrie aufweist, die mit entsprechend stabilerem Stanzwerkzeug erzeugt werden kann. Hierdurch wird der Prozess insgesamt stabiler. Zudem sind die eingeprägten Vertiefungskonturen in den Kontaktstiften form- bzw. werkzeuggebunden und somit weniger toleranzbehaftet herstellbar als einzeln gefräste Elektroden.

Bevorzugt ist die randseitige Öffnung der Einlaufgeometrie querschnittlich so bemessen, dass der Wicklungsdrahtquerschnitt vollständig darin aufgenommen werden kann bzw. wird, ohne die randseitige, oben offene Öffnungsgeometrie (senkrecht zur Längserstreckung des Wicklungsdrahtes) zu überragen.

Für den Fall, dass mit dem Kontaktelement ein planares Kontaktplättchen oder eine planare Lasche verschweißt wird, also auf eine Vertiefungsgeometrie im Plättchen bzw. in der Lasche verzichtet wird, kann die Bildverarbeitungsüberprüfung nach dem Verschweißen sich auf die Lage und Position des Plättchens bzw. der Lasche beschränken, die aufwändige Prüfung einer Vertiefungsgeometrie in der Metallabdeckung (Metallplättchen oder Metalllasche) kann entfallen.

Ganz besonders bevorzugt ist es, wenn die Querschnittsfläche der Vertiefung über die Längserstreckung der Vertiefung nicht konstant ist, sondern in Richtung eines dem Kontaktelement zugeordneten (freien) Wicklungsdrahtendes abnimmt - es ergibt sich also eine verjüngende Vertiefungsquerschnittsgeometrie, wobei es bevorzugt ist, wenn der Querschnitt trompetenförmig verjüngend ausgebildet ist. Durch die verjüngende Vertiefungsgeometrie kann eine in Richtung Wicklungsdrahtende, vorzugsweise kontinuierlich, zunehmende Wicklungsdrahtquetschung erreicht werden, wodurch die Schweißverbindung deutlich robuster ausfällt.

Besonders zweckmäßig ist es, wenn es sich insgesamt um eine (bis auf die notwendige Dickenerstreckung) zweidimensionale, d.h. flache Metallabdeckungsausgestaltung handelt.

In Weiterbildung der Erfindung ist mit Vorteil vorgesehen, dass das Kontaktelement an einem die Spulenwicklung tragenden Kunststoffträger festgelegt ist und bei Bedarf außerhalb des Kunststoffträgers, vorzugsweise um zumindest näherungsweise 90°, umgebogen ist. Es ist alternativ auch eine Ausführungsvariante ohne umgebogenes Kontaktelement realisierbar.

Wie eingangs bereits erläutert, kann die Metallabdeckung in Form eines von dem Kontaktelement vor dem Verschweißen separates Metallplättchen ausgebildet sein oder alternativ einstückig mit dem Kontaktelement ausgebildet und in die die Vertiefung überdeckende Position umgebogen sein.

Die Erfindung betrifft nicht nur eine Spuleneinrichtung als solches, sondern auch eine elektromagnetische Stellvorrichtung mit einer nach dem Konzept der Erfindung ausgebildeten Spuleneinrichtung sowie einen elektromagnetischen Sensor mit einer nach dem Konzept der Erfindung ausgebildeten Spuleneinrichtung. Insbesondere handelt es sich um eine elektromagnetische Stellvorrichtung oder einen elektromagnetischen Sensor für Kfz-Anwendungen, beispielsweise einen ABS-Sensor. Die elektromagnetische Stellvorrichtung umfasst neben der Spuleneinrichtung bevorzugt ein durch die Kraft einer bestromten, insbesondere stationär vorgesehenen Spuleneinrichtung bewegbares, bevorzugt langgestrecktes Stellelement. Bei Bedarf können an diesem Permanentmagnetmittel zum Zusammenwirken mit einem Kernbereich zugeordnet sein. Gerade die Verwendung der Erfindung im Rahmen einer elektromagnetischen Stellvorrichtung (und vergleichbare Argumente gelten dann auch für eine Verwendung im Rahmen eines elektromagnetischen Sensors) bringen den Vorteil, dass das hier gegebene dynamische Umfeld in besonderer Weise die Verbindung zwischen Wicklungsdraht und Kotaktelement belastet und die vorliegende Erfindung hier besonders dauerhaft, kontaktsicher und fehlerunanfällig ist: sowohl etwa die Bewegung eines Stellelements in einer elektromagnetischen Stellvorrichtung mit der damit verbundenen (ggf. periodischen) Impulsbelastung der Gesamtanordnung, als auch eine Anordnung derartiger Vorrichtungen etwa in einem typischen Anwendungsgebiet Kraftfahrzeug (sei es als Verstellvorrichtung für Verbrennungsmotoraggregate, sei es als Sensor für die erwähnten ABS-Einheiten) bringen regelmäßige Rüttel-, Schüttel- oder andere Einflüsse auf diese Verbindung zwischen Wicklungsdraht und Kontaktelement, welche im Rahmen der Erfindung im Vergleich zum Stand der Technik überragend kontaktsicher werden.

Ferner betrifft die Erfindung die Verwendung einer planaren Schweißelektrode zum planaren Verschweißen eines Wicklungsdrahtes einer Spulenwicklung einer Spuleneinrichtung mit einer Metallabdeckung und einem Kontaktelement gemäss Anspruch 7.

Eine wie in Anspruch 7 spezifiziert ausgebildete Elektrode kann eingesetzt werden, wenn die Metallabdeckung frei ist von einer Vertiefungseinprägung für den Wicklungsdraht bzw. wenn eine solche Vertiefungseinprägung nicht durch Prägen mittels der Schweißelektrode vorgesehen werden soll. Darüber hinaus führt die Erfindung auf ein Verfahren zum Herstellen einer Spuleneinrichtung nach Anspruch 1 wie definiert in Anspruch 9.

Die Kraft, mit der die Schweißelektrode gegen die Metallabdeckung gedrückt wird, muss lediglich ausreichen, um einen ausreichenden Schweißkontakt herzustellen und die Metallabdeckung in Position zu halten - die Anpresskraft muss nicht, wie im Stand der Technik, so hoch bemessen sein, dass mit der Elektrode eine Prägung der Metallabdeckung vorgenommen werden kann.

Ganz besonders zweckmäßig ist es, wenn das Einprägen der Vertiefung in das Kontaktelement in derselben Maschineneinspannung durchgeführt wird, in der das Kontaktelement aus einem Metallblech ausgestanzt wird. Bevorzugt erfolgt das Einprägen der Vertiefung unmittelbar in derselben Auf- oder Abwärtsbewegung einer entsprechenden kombinierten Stanz- und Prägepresse.

Insbesondere um das Bauraumvolumen der Spuleneinrichtung zu minimieren, kann das vor dem Einlegen des Wicklungsdrahtabschnittes an einem Kunststoffträger für die Spulenwicklung festgelegte Kontaktelement nach dem Verschweißen in einem Bereich außerhalb des Kunststoffträgers der Spuleneinrichtung umgebogen werden.

Die verwendete Schweisselektrode umfasst bevorzugt in ihrer Wirkfläche eine Ansaugöffnung, durch die hindurch ein zu verschweißendes Metallplättchen ansaugbar ist, insbesondere mit dem Ziel, das Metallplättchen mittels der Elektrode durch Ansaugen aus einem Vorrat zu entnehmen und im Schweißbereich zu positionieren und zu halten. Bevorzugt ist innerhalb der Elektrode ein Ansaugkanal ausgebildet, der über die Ausgangsöffnung in der Wirkfläche der Elektrode ausmündet, wobei der Ansaugkanal an eine Unterdruckquelle angeschlossen bzw. anschließbar ist. Die Elektrode zeichnet sich durch eine plane Kontaktfläche (Wirkfläche) zur Auflage auf dem vorzugsweise ebenfalls planen Metallplättchen aus. Weitere Vorteile, bevorzugte Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Spuleneinrichtung einer ansonsten nicht weiter dargestellten elektromagnetischen Stellvorrichtung, wobei der Spuleneinrichtung ein Kernbereich zum Zusammenwirken mit einem nicht dargestellten Stellelement zugeordnet ist,
- Fig. 2a und 2b:: ein Kontaktelement für die Spuleneinrichtung gemäß Fig. 1 mit einer eingeprägten, sich querschnittlich verjüngenden Vertiefung (Fig. 2a Draufsicht, Fig. 2b Stirnansicht),
- Fig. 3a und 3b:: das Kontaktelement gemäß den Fig. 2a und 2b mit in der Vertiefung aufgenommenem (noch) nicht abisoliertem Wicklungsdraht, wobei der Wicklungsdraht querschnittlich im späteren Schweißbereich vollständig in der Vertiefung aufgenommen ist (Fig. 3a Draufsicht, Fig. 3b Stirnansicht),
- Fig. 4 und 4b:: das Kontaktelement gemäß den Fig. 3a und 3b mit in der Vertiefung aufgenommenem Wicklungsdraht, auf den eine Metallabdeckung in Form eines von dem Kontaktelement separaten, im Wesentlichen zweidimensionalen Plättchen überdeckt ist, wobei das Plättchen in einem späteren Verfahrensschritt mit dem Kontaktelement, bevorzugt durch Widerstandsschweißen verschweißt wird,
- Fig. 5a bis 5c:: ein alternatives Kontaktelement mit integraler (angeformter bzw. einteiliger) Metalllasche (Metallabdeckung), wobei in dem Kontaktelement eine sich querschnittlich verjüngende, langgestreckte Vertiefung zur Aufnahme eines Wicklungsdrahtes vorgesehen ist (Fig. 5a Draufsicht, Fig. 5b Stirnansicht, Fig. 5c Seitenansicht),

- Fig. 6a bis 6c:: das Kontaktelement gemäß den Fig. 5a bis 5c mit eingelegtem Wicklungsdraht und noch nicht umgebogener Lasche (Fig. 6a Draufsicht, Fig. 6c Stirnansicht, Fig. 6c Seitenansicht),
- Fig. 7a Bis 7c:: das Kontaktelement gemäß den Fig. 6a bis 6c mit umgebogener, den Wicklungsdraht überdeckender Lasche vor dem Verschweißen, bei dem die Lasche über eine Schweißelektrode mit einem Stromimpuls beaufschlagt wird,
- Fig. 8:: eine stark schematisierte Seitenansicht einer Schweißelektrode zum Verschweißen eines Wicklungsdrahtes mit einem Kontaktelement, und
- Fig. 9:: die Schweißelektrode gemäß Fig. 8 in einer Ansicht auf die Wirkfläche zur Kontaktierung der Metallabdeckung.

In den Figuren sind gleiche Elemente und Elemente mit der gleichen Funktion mit den gleichen Bezugszeichen gekennzeichnet.

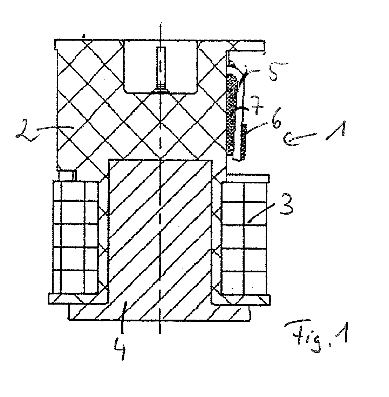

In Fig. 1 ist in einer geschnittenen Darstellung eine Spuleneinrichtung 1 für eine elektromagnetische, ansonsten an sich bekannte Stellvorrichtung gezeigt, wie diese beispielsweise in der DE 20 2006 011 904 U1 im Detail beschrieben ist. Die Spuleneinrichtung 1 umfasst einen als Spritzgussteil ausgebildeten Kunststoffträger 2, der eine bestrombare Spulenwicklung 3 aus einem Wicklungsdraht, bestehend aus einem mit einem Isolationslack überzogenen Kupferdraht, trägt. In den Kunststoffträger 2 ragt ein magnetisch leitender Kernbereich 4 zum Zusammenwirken mit einem nicht dargestellten Stellelement hinein.

An dem Kunststoffträger 2 sind zwei Kontaktelemente festgelegt, an denen jeweils ein Wicklungsdraht kontaktierend fixiert ist, wobei in der Schnittansicht gemäß Fig. 1 aus Übersichtlichkeitsgründen weder Wicklungsdrähte noch zwei Kontaktelemente, sondern lediglich eines der beiden Kontaktelemente 5 dargestellt ist. Auf dem Kontaktelement 5 ist eine hier als Metallplättchen ausgebildete Metallabdeckung 6 durch Widerstandsschweißen festgeschweißt. Das Kontaktelement 5 ist außerhalb des Kunststoffträgers 2 um etwa 90° in der Zeichnungsebene nach unten abgebogen und ist in ein Silikonkissen 7 eingebettet, um Schwingungen bei der bestimmungsgemäßen Verwendung des Spuleneinsatzes 1 zu dämpfen.

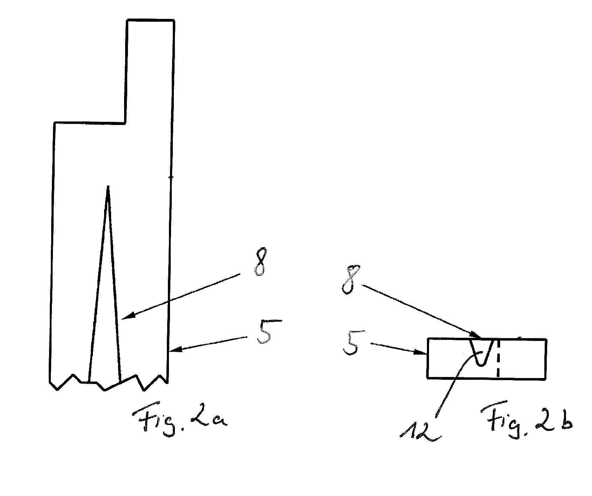

In den Fig. 2a und 2b ist eine mögliche Ausgestaltung eines bei einer Spuleneinrichtung 1 gemäß Fig. 1 zum Einsatz kommenden Kontaktelementes 5 vor einem fakultativen Umbiegen gezeigt. Zu erkennen ist, dass in das, vorzugsweise durch Stanzen hergestellte, metallische Kontaktelement 5 eine langgestreckte Vertiefung 8 zur Aufnahme eines (durch den Verschweißvorgang abisolierten) Wicklungsdrahtabschnittes eingebracht ist. Die Vertiefung 8 erstreckt sich dabei in Richtung der Längserstreckung des ihr zugeordneten Wicklungsdrahtabschnittes. Zu erkennen ist, dass die Vertiefung bis an einen Randbereich des Kontaktelementes 5 geführt und somit als Drahteinlauf ausgebildet ist. Zu erkennen ist ferner, dass die quer zur Längserstreckung der Vertiefung 8 ausgerichtete Breite sowie die sich von der späteren Metallabdeckung weg erstreckende Tiefenerstreckung der Vertiefung 8 in Richtung ihrer Längserstreckung, hin zum jeweiligen, nicht dargestellten Drahtende abnimmt. Der Vertiefungsquerschnitt der Vertiefung 8 verjüngt sich also in Richtung Wicklungsdrahtende und in dem gezeigten Ausführungsbeispiel in Richtung des freien Endes des Kontaktelementes.

Die Vertiefung 8 ist abschnittsweise eingefasst von einem planaren Auflagebereich für die Metallabdeckung.

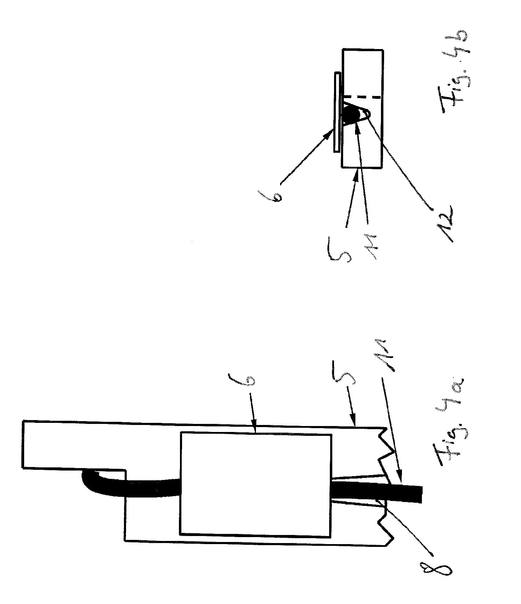

In das bevorzugt als Stanz-/Prägeteil ausgebildete Kontaktelement 5, genauer in die Vertiefung 8, wird zum Herstellen der Schweißverbindung ein Wicklungsdraht 11 eingelegt. Daraufhin wird ein Metallabschnitt, in dem gezeigten Ausführungsbeispiel (vgl. Fig. 4a bis 4b) ein Metallplättchen auf das Kontaktelement 5 aufgebracht und mit einer Elektrode gegen das Kontaktelement unter Überdeckung der Vertiefung 8 mit darin aufgenommenem Wicklungsdrahtabschnitt gedrückt und mit mindestens einem Stromimpuls zum Herstellen der Schweißverbindung beaufschlagt. Dabei liegt das planare Metallplättchen auf dem planaren Auflagebereich des Kontaktelementes. Bevorzugt wird das Metallplättchen zum Positionieren und Halten von der Schweißelektrode angesaugt, welche zu diesem Zweck eine Ansaugöffnung aufweist.

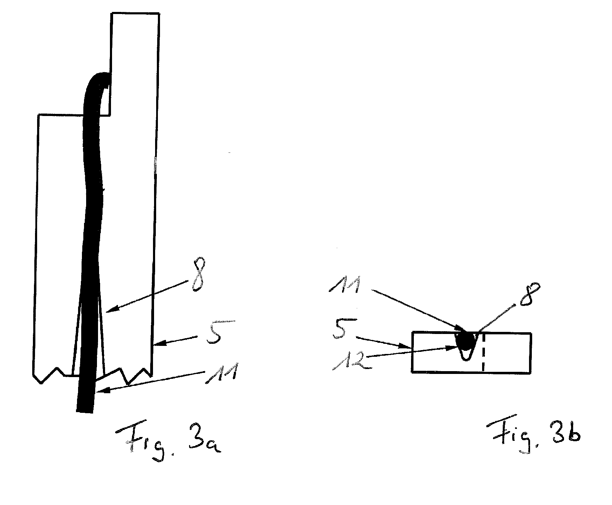

In den Fig. 3a und 3b ist das Kontaktelement 5 nach einem nächsten Verfahrensschritt gezeigt, in welchem in die Vertiefung ein Wicklungsdraht 11 eingelegt wurde. In dem gezeigten Ausführungsbeispiel und generell bevorzugt derart, dass dieser in eine randseitige Öffnung 12 einmündet und sich dann in axialer Richtung über die Vertiefung 8 hinaus erstreckt. Besonders bevorzugt ist es, wenn der Wicklungsdraht 11 vor dem Einlegen in die Vertiefung 8 in dem in der Vertiefung 8 aufgenommenen Bereich noch nicht abisoliert ist - bevorzugt geschieht das Abisolieren durch den späteren Verschweißschritt.

In Fig. 3b ist zu erkennen, dass der Wicklungsdraht 11, zumindest abschnittsweise vollumfänglich in der Vertiefung aufgenommen ist, diese also zumindest abschnittsweise nicht überragt. Bevorzugt ist die Querschnittsfläche der Vertiefung und die des Wicklungsdrahtes 11 derart aufeinander abgestimmt, dass spätestens beim späteren Andrücken des Wicklungsdrahtes mit einer Metallabdeckung der Wicklungsdraht 11 im Auflagebereich der Metallabdeckung (späterer Schweißbereich) vollständig in der Vertiefung 8 aufgenommen ist.

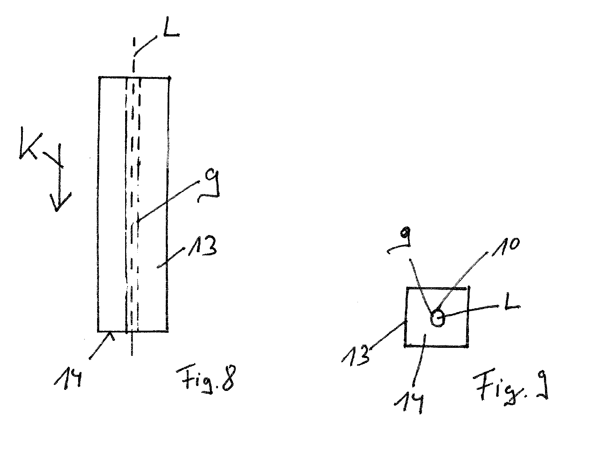

In den Fig. 4a und 4b ist das Kontaktelement 5 mit darauf befindlicher Metallabdeckung 6 gezeigt, welche in dem gezeigten Ausführungsbeispiel als Metallplättchen ausgebildet ist. Der Wicklungsdraht 11 ist dabei von der Metallabdeckung 6 überdeckt. Wie sich insbesondere aus Fig. 4b ergibt, mündet der Wicklungsdraht in die randseitige Öffnung 12 der randseitig offenen Vertiefung 8 und ist sandwichartig aufgenommen zwischen dem auf beiden Flächenseiten planen, im Wesentlichen zweidimensionalen Metallplättchen (Metallabdeckung) 6 und dem Kontaktelement 5. Die Metallabdeckung 6 ist vertiefungseinprägungsfrei ausgestaltet und kann mit Hilfe einer in den Fig. 8 und 9 lediglich schematisch dargestellten Schweißelektrode 13 ohne Prägungsgeometrie mit dem Kontaktelement 5 zur endgültigen Fixierung des Wicklungsdrahtes 11 verschweißt werden.

Wie sich aus den Fig. 8 und 9 ergibt, weist die Schweißelektrode 13 eine plane Wirkfläche 14 zum Zusammenwirken mit der in Fig. 8 gezeigten Oberflächenseite der Metallabdeckung 6 auf. Die Wirkfläche 14 erstreckt sich senkrecht zur Längsmittelachse L der Schweißelektrode 13 sowie senkrecht zur Kraftbeaufschlagungsrichtung K, also der Verstellrichtung, in welcher die Schweißelektrode 13 auf die Metallabdeckung 6 zum Verschweißen zugestellt wird. Die Wirkfläche 14 ist prägungskonturfrei ausgestaltet, was lediglich dadurch möglich ist, dass das Kontaktelement 5 eine Vertiefung zur Aufnahme eines Wicklungsdrahtabschnittes aufweist. Wie den Fig. 8 und 9 zu entnehmen ist, ist in einer bevorzugten Ausführungsvariante in der Schweißelektrode 13 ein Ansaugkanal 9 ausgebildet, der an eine nicht dargestellte Unterdruckquelle anschließbar bzw. angeschlossen ist. Der Ansaugkanal 9 mündet in der Wirkfläche 14 als Ansaugöffnung 10 aus und dient zum Ansaugen eines Metallplättchens, das bei Bedarf mit Hilfe der Schweißelektrode von einem Vorrat entnommen und zu dem Kontaktelement 15 transportiert und positioniert werden kann.

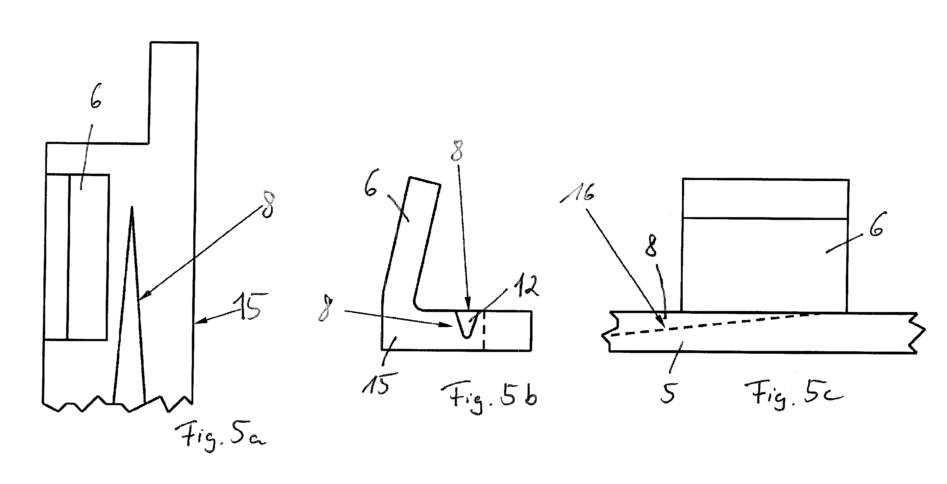

In den Fig. 5a bis 5c ist in unterschiedlichen Ansichten eine alternative Ausführungsform eines Kontaktelementes 15 gezeigt. Dieses umfasst im Gegensatz zu dem zuvor im Detail erläuterten Kontaktelement 15 eine integrale Metalllasche als Metallabdeckung 6, die um eine nicht eingezeichnete Achse umbiegbar ist, um in diesem umgebogenen Zustand einen in einer Vertiefung 8 aufgenommen Wicklungsdraht zu überdecken bzw. um in diesem überdeckenden Zustand mit dem Bereich des Kontaktelementes 15 um die Vertiefung herum mit Hilfe einer Schweißelektrode, insbesondere einer in den Fig. 8 und 9 gezeigten Schweißelektrode 13 verschweißt zu werden.

In dem gezeigten Ausführungsbeispiel entspricht die Kontur der Vertiefung 8 dem vorangehenden Ausführungsbeispiel. Diesbezüglich wird auf die vorstehende Figurenbeschreibung verwiesen.

Aus der Seitenansicht gemäß Fig. 5c ist ersichtlich, dass der Vertiefungsgrund 16 der Vertiefung 8 in eine von der Öffnung 12 weg orientierte Richtung ansteigt - anders ausgedrückt nimmt die Tiefe der Vertiefung 8 in Richtung von der Öffnung 12 weg ab, in dem Ausführungsbeispiel linear.

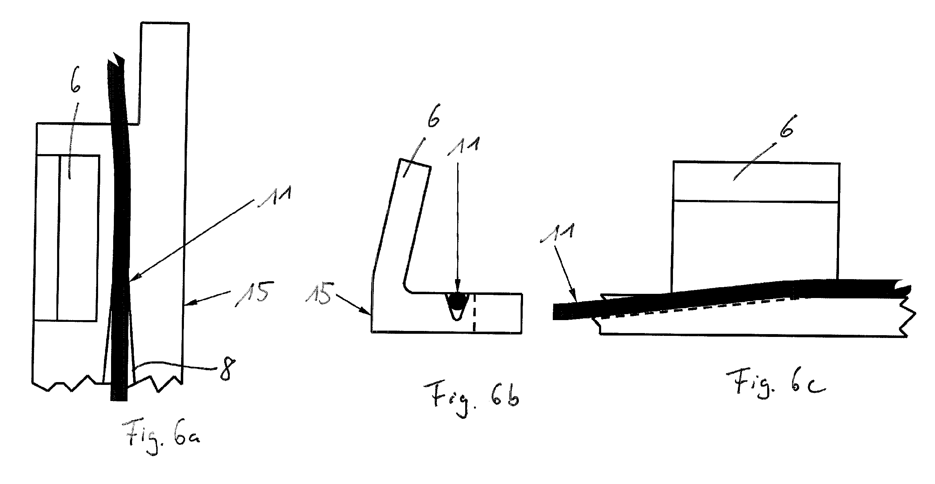

In den Fig. 6a bis 6c ist das Kontaktelement 15 gemäß den Fig. 5a bis 5c mit in der Vertiefung 8 aufgenommenem Wicklungsdraht 11 gezeigt. Dieser ist in dem gezeigten Verfahrensschritt vor dem eigentlichen Verschweißschritt im späteren Schweißbereich noch nicht abisoliert, da das Abisolieren durch das Erhitzen beim Verschweißen realisiert wird. In einem auf die Situation gemäß den Fig. 6a bis 6c gezeigten Verfahrensschritt wird dann die integrale Metallabdeckung 6 (Lasche) umgebogen und zwar um eine sich in Richtung der Längserstreckung des Wicklungsdrahtes erstreckende Achse.

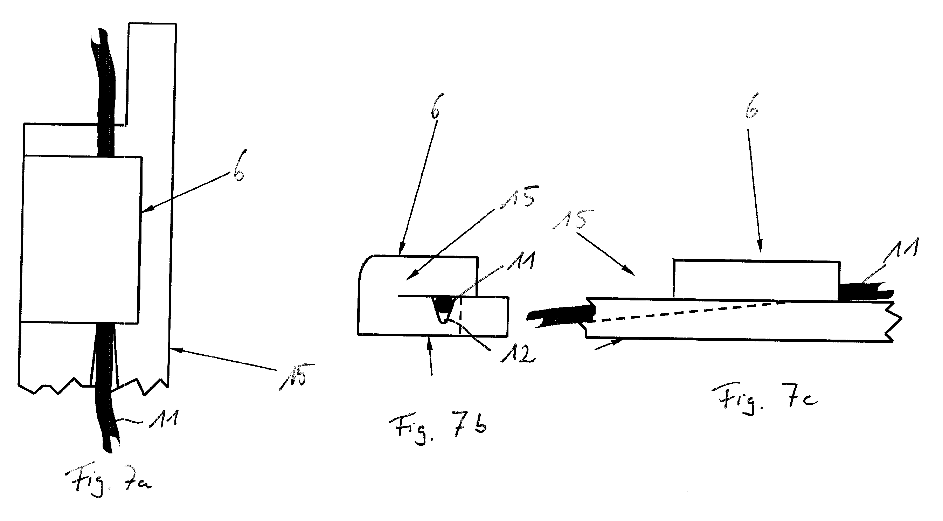

Dieser umgebogene Zustand ist in den Fig. 7a bis 7c dargestellt. In einem auf diesen Umbiegeschritt folgenden Schritt wird die Metallabdeckung 6 mit dem Kontaktelement 15, genauer mit dem Bereich des Kontaktelementes 15 um die Vertiefung 8 verschweißt, in dem auf die in Fig. 7a gezeigte Oberseite der Metallabdeckung 6 eine beispielhaft in Fig. 8 und 9 gezeigte Schweißelektrode 13 aufgesetzt und bestromt wird.

### Bezugszeichenliste

- 1: Spuleneinrichtung, Spuleneinsatz
- 2: Kunststoffträger
- 3: Spulenwicklung
- 4: Kernbereich
- 5: Kontaktelement
- 6: Metallabdeckung
- 7: Silikonkissen
- 8: Vertiefung
- 9: Ansaugkanal
- 10: Ansaugöffnung
- 11: Wicklungsdraht
- 12: Öffnung
- 13: Schweißelektrode
- 14: Wirkfläche
- 15: Kontaktelement
- 16: Vertiefungsgrund

- K: Kraftbeaufschlagungsrichtung
- L: Längsmittelachse der Schweißelektrode

## Patentansprüche

1. Spuleneinrichtung mit einer Spulenwicklung (3) für eine elektromagnetische Stellvorrichtung oder einen elektromagnetischen Sensor, aufweisend einen mit einer Isolierung versehenen Wicklungsdraht (11) der Spulenwicklung (3) der zu zumindest einem als metallisches Teil, insbesondere Stanzteil, ausgebildeten Kontaktelement (5,15) der Spuleneinrichtung (1) geführt und dort mit einem abisolierten Abschnitt zwischen dem Kontaktelement (5,15) der Spuleneinrichtung (1) und einer Metallabdeckung (6), die Teig der Spuleneinrichtung (1) ist, aufgenommen ist, wobei in das Kontaktelement (5,15) eine den Wicklungsdraht (11) abschnittsweise aufnehmende als Wicklungsdrahteinlaufgeometrie ausgebildete Vertiefung (8) eingebracht, insbesondere eingeprägt, ist, und
wobei die Metallabdeckung (6) die Vertiefung (8) mit dem darin aufgenommenen Wicklungsdraht (11) zumindest abschnittsweise überdeckt und wobei die Metallabdeckung (6) mit dem Kontaktelement (5,15) und dem Wicklungsdraht (11) verschweißt ist,
**dadurch gekennzeichnet,**
**dass** die als planares Metallplättchen oder als eine keine randseitig offene Wicklungsdrahtaufnahme-Vertiefung aufweisende Lasche ausgebildete Metallabdeckung (6) eine dem in der Vertiefung (8) aufgenommenen Wicklungsdrahtabschnitt zugewandte, einprägungsfreie Unterflächenseite und/oder eine einprägungsfreie, von dem Wicklungsdrahtabschnitt abgewandete Oberflächenseite aufweist.

2. Spuleneinrichtung nach Anspruch 1,
**dadurch gekennzeichnet,**
**dass** ein Vertiefungsquerschnitt der Vertiefung (8) sich in Richtung einem dem Kontaktelement (5,15) zugeordneten Wicklungsdrahtende verjüngend ausgebildet ist.

3. Spuleneinrichtung nach einem der vorhergehenden Ansprüche
**dadurch gekennzeichnet,**
**dass** das Kontaktelement (5,15) an einem die Spulenwicklung (3) tragenden Kunststoffträger (2) der Spuleneinrichtung (1) festgelegt ist und bevorzugt außerhalb des Kunststoffträgers (2), vorzugsweise um 90°, umgebogen ist.

4. Spuleneinrichtung nach einem der vorhergehenden Ansprüche,
**dadurch gekennzeichnet,**
**dass** die Metallabdeckung (6) ein von dem Kontaktelement (5,15) vor dem Verschweißen separates, mit diesem verschweißtes Metallplättchen ist oder einstückig mit dem Kontaktelement (5,15) ausgebildet und in die die Vertiefung (8) überdeckende Position umgebogen ist.

5. Spuleneinrichtung nach einem der vorhergehenden Ansprüche,
**dadurch gekennzeichnet,**
**dass** die Metallabdeckung (6) erst durch das Verschweißen mit dem Kontaktelement (5, 15) verbunden ist, oder die Metallabdeckung über einen Biegebereich einstückig mit dem Kontaktelement (5, 15) ausgebildet ist.

6. Elektromagnetische Stellvorrichtung oder elektromagnetischer Sensor mit einer Spuleneinrichtung (1) nach einem der vorhergehenden Ansprüche.

7. Verwendung einer Schweißelektrode (13) mit einer planaren Elektrodenstirnfläche zum planaren Verschweißen eines Wicklungsdrahtes (11) einer Spulenwicklung (3) einer Spuleneinrichtung (1) mit einer Metallabdeckung und einem metallischen Kontaktelement (5,15) der Spuleneinrichtung (1), in das eine sich in Richtung der Längserstreckung des Wicklungsdrahtes (11) erstreckende Vertiefung (8) eingebracht ist, wobei die Schweißelektrode (13) eine ebene Wirkfläche zum Zusammenwirken mit einer von dem Wicklungsdraht (11) abgewandten Oberseite der als planares Metallplättchen oder eine keine randseitig offene Wicklungsdrahtaufnahme-Vertiefung aufweisende Lasche ausgebildeten Metallabdeckung (6) aufweist, die die Vertiefung mit dem darin aufgenommenen Wicklungsdraht zumindest abschnittsweise überdeckt und wobei die Wirkfläche senkrecht zur Längserstreckung der Schweißelektrode (13) und/oder senkrecht zur Kraftbeaufschlagungsrichtung beim Verschweißen ausgerichtet ist.

8. Verwendung nach Anspruch 7,
**dadurch gekennzeichnet,**
**dass** die verwendete Schweißelektrode (13) eine Ansaugöffnung zum Ansaugen der Metallabdeckung in ihrer Wirkfläche (14) aufweist.

9. Verfahren zum Herstellen einer Spuleneinrichtung nach einem der Ansprüche 1 bis 5 mit den Schritten:
. Bereitstellen eines, vorzugsweise durch Stanzen aus einem Metallblech herzustellenden, metallischen Kontaktelementes (5, 15) und Einprägen einer Vertiefung (8) zur abschnittsweisen Aufnahme eines Wicklungsdrahtes (11) einer Spulenwicklung (3), und
. Einlegen eines Wicklungsdrahtabschnittes eines Wicklungsdrahtes (11) einer Spulenwicklung (3) der Spuleneinrichtung in die sich in Richtung der Längserstreckung des Wicklungsdrahtes (11) erstreckende Vertiefung (8) des Kontaktelementes (5,15), vorzugsweise in einem nicht abisolierten Zustand, und
. Positionieren einer als planares Metallplättchen oder eine keine randseitig offene Wicklungsdrahtaufnahme-Vertiefung aufweisende Lasche ausgebildeten Metallabdeckung (6), derart, dass die Metallabdeckung (6) die Vertiefung (8) mit dem darin aufgenommenen Wicklungsdrahtabschnitt zumindest abschnittsweise überdeckt, und
. Beaufschlagen der Metallabdeckung (6) mit mindestens einem Stromimpuls zum Verschweißen des Wicklungsdrahtes (11) und der Metallabdeckung (6) mit dem Kontaktelement (5,15).

10. Verfahren nach Anspruch 9,
**dadurch gekennzeichnet,**
**dass** das Einprägen der Vertiefung (8) in derselben Einspannung durchgeführt wird, in der das Kontaktelement (5,15) aus einem Metallblech ausgestanzt wird.

11. Verfahren nach einem der Ansprüche 9 oder 10,
**dadurch gekennzeichnet,**
**dass** das Kontaktelement (5,15) vor dem Einlegen des Wicklungsdrahtabschnittes an einem Kunststoffträger (2) für die Spulenwicklung (3) festgelegt und vorzugsweise nach dem Verschweißen außerhalb des Kunststoffträgers (2) umgebogen wird.

12. Verfahren nach einem der Ansprüche 9 bis 11,
**dadurch gekennzeichnet,**
**dass** die Metallabdeckung (6) durch eine in einer Schweißelektrode (13) vorgesehene Ansaugöffnung angesaugt wird, insbesondere um die Metallabdeckung (6) zu positionieren.

## Claims

1. A coil device with a coil winding (3) for an electromagnetic actuator, or an electromagnetic sensor, having a winding wire (11) of the coil winding (3) provided with insulation, which leads to at least one contact element (5, 15) of the coil device (1) formed as a metallic part, in particular a stamped part, and there, with a section stripped of insulation, is accommodated between the contact element (5, 15) of the coil device (1) and a metal cover (6), which is part of the coil device (1), wherein an indentation (8), sectionally accommodating the winding wire (11), and formed as a winding wire in-feed geometry, is introduced, in particular impressed, into the contact element (5, 15), and
wherein the metal cover (6) covers at least sectionally the indentation (8) with the therein accommodated winding wire (11), and wherein the metal cover (6) is welded to the contact element (5, 15) and the winding wire (11),
**characterized in that**,
the metal cover (6), formed as a small planar metal plate, or as a tab not having an indentation open at an edge, for accommodating the winding wire, has a lower surface free of impressions, facing towards the winding wire section accommodated in the indentation (8), and/or an upper surface free of impressions, facing away from the winding wire section.

2. The coil device according to claim 1,
**characterized in that**,
a cross-section of the indentation (8) is formed such that it tapers in the direction of a winding wire end assigned to the contact element (5, 15).

3. The coil device according to any one of the preceding claims,
**characterized in that**,
the contact element (5, 15) is fixed on a plastic support (2) of the coil device (1) supporting the coil winding (3), and is preferably bent outboard of the plastic support (2), preferably through 90°.

4. The coil device according to any one of the preceding claims,
**characterized in that**,
the metal cover (6) is a small metal plate, which before welding is separate from the contact element (5, 15), and which is welded to the latter, or is formed in one piece with the contact element (5, 15) and is bent into the position covering the indentation (8) .

5. The coil device according to any one of the preceding claims,
**characterized in that**,
the metal cover (6) is only connected with the contact element (5, 15) by means of welding, or the metal cover is formed in one piece with the contact element (5, 15) via a bending region.

6. An electromagnetic actuator or an electromagnetic sensor with a coil device (1) according to any one of the preceding claims.

7. Use of a welding electrode (13) with a planar electrode end face for purposes of planar welding of a winding wire (11) of a coil winding (3) of a coil device (1) to a metal cover, and a metallic contact element (5, 15) of the coil device (1), into which is introduced an indentation (8) extending in the direction of the lengthwise extent of the winding wire (11), wherein the welding electrode (13) has a flat active face for purposes of interacting with an upper side, facing away from the winding wire (11), of the metal cover (6) formed as a small planar metal plate, or as a tab not having an indentation open at an edge, accommodating the winding wire, which metal cover covers at least sectionally the indentation with the therein accommodated winding wire, and wherein the active face is aligned at right-angles to the lengthwise extent of the welding electrode (13), and/or at right-angles to the direction in which force is applied during welding.

8. The use according to claim 7,
**characterized in that**,
the welding electrode (13) used has a suction opening in its active face (14) for purposes of applying suction to the metal cover.

9. A method for the manufacture of a coil device in according to one of the claims 1 to 5, with the steps:
. Provision of a metallic contact element (5, 15), preferably to be manufactured by being stamped out of a metal sheet, and impression of an indentation (8) for purposes of accommodating sectionally a winding wire (11) of a coil winding (3), and
. Laying of a section of winding wire (11) of a coil winding (3) of the coil device into the indentation (8) in the contact element (5, 15) extending in the direction of the lengthwise extent of the winding wire (11), preferably in a state in which it has not been stripped of insulation, and
. Positioning of a metal cover (6), designed as a small planar metal plate, or as a tab not having an indentation open at an edge, accommodating the winding wire, such that the metal cover (6) at least sectionally covers the indentation (8) with the therein accommodated winding wire section, and
. Application of at least one current pulse to the metal cover (6) for purposes of welding the winding wire (11) and the metal cover (6) to the contact element (5, 15).

10. The method according to claim 9,
**characterized in that**,
the impression of the indentation (8) is executed in the same clamping in which the contact element (5, 15) is stamped out of a metal sheet.

11. The method according to one of the claims 9 or 10,
**characterized in that**,
before the laying in of the winding wire section the contact element (5, 15) is fixed on a plastic support (2) for the coil winding (3), and after welding is preferably bent outboard of the plastic support (2).

12. The method according to one of the claims 9 to 11,
**characterized in that**,
suction is applied to the metal cover (6) by a suction opening provided in a welding electrode (13), in particular so as to position the metal cover (6).

## Revendications

1. Dispositif de bobine doté d'un enroulement de bobine (3) pour ensemble électromagnétique d'ajustement ou capteur électromagnétique, dont un fil (11) de l'enroulement de bobine (3), doté d'une isolation, est amené à au moins un élément de contact (5, 15) du dispositif de bobine (1), configuré comme pièce métallique et en particulier pièce estampée, pour y être repris par une partie isolée entre l'élément de contact (5, 15) du dispositif de bobine (1) et un recouvrement métallique (6) qui fait partie du dispositif de bobine (1), un creux (8) configuré comme géométrie d'entrée de fil d'enroulement, reprenant par partie le fil d'enroulement (11), étant ménagé et en particulier imprimé dans l'élément de contact (5, 15), le recouvrement métallique (6) recouvrant au moins en partie le creux (8) et le fil d'enroulement (11) qui y est repris et le recouvrement métallique (6) étant soudé à l'élément de contact (5, 15) et au fil d'enroulement (11), **caractérisé en ce que** le recouvrement métallique (6) configuré comme plaquette métallique plane ou comme patte ne présentant pas de creux latéral ouvert de reprise de fil d'enroulement présente un côté de surface inférieure non imprimé, tourné vers la partie du fil d'enroulement reprise dans le creux (8) et/ou un côté de surface non imprimé non tourné vers la partie de fil d'enroulement.

2. Dispositif de bobine selon la revendication 1, **caractérisé en ce qu'**une section transversale du creux (8) se rétrécit en direction d'une extrémité du fil d'enroulement associée à l'élément de contact (5, 15).

3. Dispositif de bobine selon l'une des revendications précédentes, **caractérisé en ce que** l'élément de contact (5, 15) est fixé sur un support (2) en matière synthétique du dispositif de bobine (1), qui porte l'enroulement de bobine (3) et est cintré de préférence sur 90°, de préférence à l'extérieur du support (2) en matière synthétique.

4. Dispositif de bobine selon l'une des revendications précédentes, **caractérisé en ce que** le recouvrement métallique (6) est une plaquette métallique séparée de l'élément de contact (5, 15) avant d'y être soudé et soudée sur ce dernier ou est formé d'un seul tenant avec l'élément de contact (5, 15) et cintré dans la position qui recouvre le creux (8).

5. Dispositif de bobine selon l'une des revendications précédentes, **caractérisé en ce que** le recouvrement métallique (6) n'est relié à l'élément de contact (5, 15) que par le soudage ou **en ce que** le recouvrement métallique est formé d'une seule pièce avec l'élément de contact (5, 15) sur une partie cintrée.

6. Dispositif électromagnétique d'ajustement ou capteur électromagnétique doté d'un dispositif de bobine (1) selon l'une des revendications précédentes.

7. Utilisation d'une électrode de soudage (13) présentant une surface frontale plane d'électrode en vue de souder le long d'un plan un fil d'enroulement (11) d'un enroulement de bobine (3) d'un dispositif de bobine (1) à un recouvrement métallique et un élément métallique de contact (5, 15) du dispositif de bobine (1), dans lequel un creux (8) qui s'étend dans la direction de l'extension longitudinale du fil d'enroulement (11), l'électrode de soudage (13) présentant une surface plane d'action qui coopère avec un côté supérieur, non tourné vers le fil d'enroulement (11), du recouvrement métallique (6) configuré comme plaquette métallique plane ou comme patte ne présentant pas de creux latéral ouvert de reprise de fil d'enroulement et qui recouvre au moins en partie le creux et le fil d'enroulement qui y est repris, la surface d'action étant orientée perpendiculairement à l'extension longitudinale de l'électrode de soudage (13) et/ou perpendiculairement à la direction d'application des forces lors du soudage.

8. Utilisation selon la revendication 7, **caractérisée en ce que** l'électrode de soudage (13) utilisée présente une ouverture d'aspiration qui aspire le recouvrement métallique dans sa surface d'action (14).

9. Procédé de fabrication d'un dispositif de bobine selon l'une des revendications 1 à 5, le procédé présentant les étapes qui consistent à :
préparer un élément métallique de contact (5, 15), fabriqué de préférence par estampage d'une tôle métallique, et impression d'un creux (8) qui reprend en partie un fil d'enroulement (11) d'un enroulement de bobine (3),
placer une partie d'un fil d'enroulement (11) d'un enroulement de bobine (3) du dispositif de bobine dans le creux (8) de l'élément de contact (5, 15), qui s'étend dans la direction de l'extension longitudinale du fil d'enroulement (11), de préférence dans un état non isolé,
placer un recouvrement métallique (6) configuré comme plaquette métallique plane ou comme patte ne présentant pas de creux latéral ouvert de reprise de fil d'enroulement, de telle sorte que le recouvrement métallique (6) recouvre au moins en partie le creux (8) et la partie de fil d'enroulement qui y est reprise et
appliquer sur le recouvrement métallique (6) au moins une impulsion de courant pour souder le fil d'enroulement (11) et le recouvrement métallique (6) sur l'élément de contact (5, 15).

10. Procédé selon la revendication 9, **caractérisé en ce que** l'impression du creux (8) est réalisée dans le même cadre de serrage que celui dans lequel l'élément de contact (5, 15) est estampé dans une tôle métallique.

11. Procédé selon l'une des revendications 9 ou 10, **caractérisé en ce que** l'élément de contact (5, 15) est fixé sur un support (2) en matière synthétique prévu pour l'enroulement de bobine (3) avant que la partie de fil d'enroulement y soit placée, et est cintré à l'extérieur du support (2) en matière synthétique de préférence après le soudage.

12. Procédé selon l'une des revendications 9 à 11, **caractérisé en ce que** le recouvrement métallique (6) est aspiré par une ouverture d'aspiration prévue dans une électrode de soudage (13), en particulier pour placer le recouvrement métallique (6).
